# EUROPEAN PATENT SPECIFICATION

(11) **EP 1 518 436 B1**
(45) Date of publication and mention of the grant of the patent: **15.09.2010**
(21) Application number: 03738832.9
(22) Date of filing: 19.06.2003
(51) Int. Cl.: H04W 4/06

(54) **MULTIMEDIA BROADCAST/MULTICAST SERVICE (MBMS) SUPPORT IN UTRAN**
UNTERSTÜTZUNG FÜR MULTIMEDIA-BROADCAST-/-MULTICASTDIENST (MBMS) IN UTRAN
SUPPORT DE SERVICE DE DIFFUSION/MULTI-DIFFUSION MULTIMEDIA (MBMS) DANS UN RESEAU UTRAN - RESEAU D'ACCES EN RADIOCOMMUNICATIONS POUR SYSTEME DE TELECOMMUNICATIONS MOBILES UNIVERSELLES (UMTS)

(30) Priority: 20.06.2002 SE 0201949
(43) Date of publication of application: 30.03.2005
(73) Proprietor: Telefonaktiebolaget LM Ericsson (publ), 164 83 Stockholm (SE)
(72) Inventor: VOLTOLINA, Elena, S-164 44 Kista (SE); AMIRIJOO, Sharokh, S-192 78 Sollentuna (SE); BEMING, Per, S-113 26 Stockholm (SE)
(74) Representative: Kühn, Friedrich Heinrich
(86) International application number: PCT/SE2003/001066
(87) International publication number: WO 2004/002184

(56) References cited:
- EP-A1- 1 309 213
- WO-A2-01/72057
- 'Universal mobile telecommunications system (UMTS); multimedia broadcast/multicast service (MBMS); stage 1 (3GPP TS 22.146 version 5.2.0 release 5)' ETSI TS 122 146 V5.2.0 March 2002, pages 1 - 15, XP002968000

## Description

### TECHNICAL FIELD

The present invention relates in general to Multimedia Broadcast/ Multicast Services (MBMS) in mobile communication systems.

### BACKGROUND

In the third generation telecommunication systems, higher bit-rates are offered as well as better possibilities for transmitting variable bit rate traffic. For instance, services utilizing different quality requirements are possible to multiplex. Such possibilities open up for new types of services. One of these services that is going to be included in the 3GPP (3^{rd} Generation Partnership Project) standard is a Multimedia Broadcast/Multicast Service (MBMS).

The intention with MBMS is that different users can subscribe to broadcasting and/or multicasting of multimedia information of different kinds. An information provider thus transmits the same multimedia information to a number of users. Since multimedia information typically requires high transfer capabilities, a simultaneous broadcasting/multicasting of such information will occupy a number of times as large transfer capabilities compared with a single transmission. Furthermore, if a large number of the recipients are located in the vicinity of each other, being connected to the same Node B (or base station) or at least the same MSC/VLR (Mobile Services Switching Centre/Visitor Location Register) and/or SGSN (Serving General packet radio service Support Node), the local communication resources may be severely limited. The introduction of MBMS thus potentially gives rise to a capacity problem. Furthermore, there are problems if the multitude of MBMS information is substantially unsynchronized. MBMS is disclosed in ETSI TS 122 146 V.5.2.O.

### SUMMARY

An object of the present invention is to provide methods and devices allowing for reduction of potential capacity problems operating MBMS. Another object of the present invention is to provide synchronized MBMS data to users of one and the same MBMS group. A further object of the present invention is to provide reliable and efficient mechanisms for attaching and removing users to a MBMS session. At least one object is achieved the method and radio network controllers according to claims 1, 10 and 15.

In general words, the control and user planes for MBMS are allowed to be separated. At least two user equipments belonging to the same multicast group receives MBMS data over a common user plane over the Iu interface. In cases where user equipment is controlled by a Radio Network Controller (RNC) different from the Controlling RNC (CRNC), the Radio Network Sub-system Application Part (RNSAP) is extended by procedures communicating MBMS information from the Serving RNC (SRNC) to the CRNC. New signaling over the Iu interface could range from simple requests to establish a user plane to more complicated signaling supporting configuration/reconfiguration of session parameters. The control plane of such user equipment can thus have a separate path compared with a common user plane. Preferably, the user plane is arranged directly over the Iu interface between a serving support node and the CRNC, while control planes may have a path over the Iur interface.

One of the advantages with the present invention is that since Iu MBMS user planes are established where needed and in case of common resources being allocated for several members of a multicast group receiving data in the same cell, the presence of multiple unsynchronized flows for the same MBMS session is avoided. Furthermore, enhanced procedures of the RNSAP protocol enables users controlled by a RNC different from the CRNC to participate in a MBMS multicast session. The present invention also evolves the current Universal mobile Telecommunication system Radio Access Network (UTRAN) architecture in a backward compatible way and maintains the current handling in case of dedicated resources. Moreover, signaling of MBMS information feedback between two RNCs connected via an Iur interface is enabled by the introduction of a new MBMS information transfer procedure.

### BRIEF DESCRIPTION OF THE DRAWINGS

The invention, together with further objects and advantages thereof, may best be understood by making reference to the following description taken together with the accompanying drawings, in which:
FIG. 1 is a schematic illustration of an embodiment of a mobile communication system;
FIG. 2 is a block scheme of an embodiment of a mobile communication system;
FIG. 3 is an embodiment of a protocol model for a UTRAN in a mobile communication system;
FIG. 4 is a flow diagram of an embodiment of a multimedia broadcast/multicast service procedure;
FIG. 5a is a block scheme of an embodiment of a mobile communication system supporting MBMS via dedicated links;
FIG. 5b is a block scheme of an embodiment of a mobile communication system supporting MBMS via common links according to the present invention;
FIG. 6a is a block scheme of another embodiment of a mobile communication system supporting MBMS via dedicated links;
FIG. 6b is a block scheme of another embodiment of a mobile communication system supporting MBMS via common links according to the present invention;
FIG. 7 illustrates RNSAP signaling flows according to preferred embodiments of the present invention;
FIG. 8 is a block scheme of yet another embodiment of a mobile communication system supporting MBMS via common links according to the present invention;
FIG. 9 is a block scheme of yet another embodiment of a mobile communication system supporting MBMS, having several serving support nodes;
FIG. 10 is a flow diagram of an embodiment of a multimedia broadcast/ multicast service procedure according to the present invention; and
FIG. 11 is a flow diagram of another embodiment of a multimedia broadcast/multicast service procedure according to the present invention.

### DETAILED DESCRIPTION

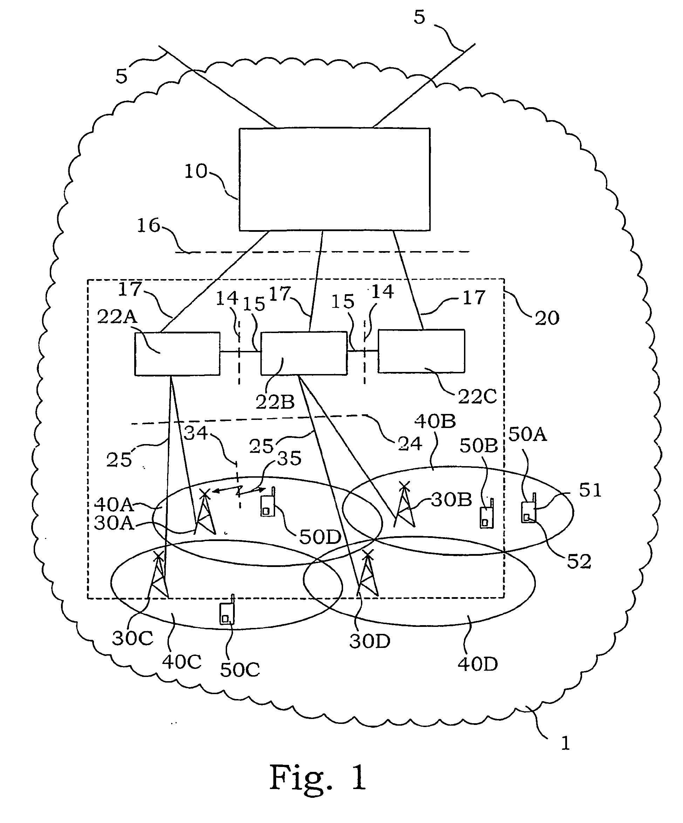

The present invention comes into use mainly in the third generation mobile communication systems. A typical example of such a mobile communication system 1 is illustrated in Fig. 1. A core network 10 is provided with connections 5 to external networks (not shown), such as e.g. PSTN (Public Switched Telephone Network), ISDN (Integrated Services Digital Network) or Internet. The core network 10 is also connected 17 to a UTRAN (UMTS Radio Access Network) 20 comprising a number of Radio Network Controllers (RNCs) 22A, 22B, 22C over an Iu interface 16. In the illustrated embodiment, the three RNCs 22A, 22B, 22C are interconnected 15 by an Iur interface 14.

In the illustrated RNCs 22A, 22B are controlling two base stations 30A-D each by connections 25 over an Iub interface 24. (In the present embodiment, the RNC 22C does not directly control any base stations.) The base stations 30A-D are also commonly known as "Node Bs" in the 3GPP specifications. Each base station 30A-D operates the radio access within a certain geographical area - cell 40A-D. User equipment 50A-D moves within the coverage of the cells 40A-D and can communicate by radio communication 35 via an Uu interface 34 with at least one of the base stations 30A-D. The base stations 30A-D thereby comprises means for communication over the radio interface Uu 34 according to prior art within this field. Similarly, the user equipments 50A-D comprises means for communication over the radio interface Uu 34 according to prior art within this field. The details of these devices and methods are not essential for the understanding of the present invention and are furthermore easily available in standard literature. The User Equipment UE 50A-D typically comprises a mobile equipment 51, e.g. a mobile phone or a portable computer, and a user SIM (Subscriber Identity Module) card 52.

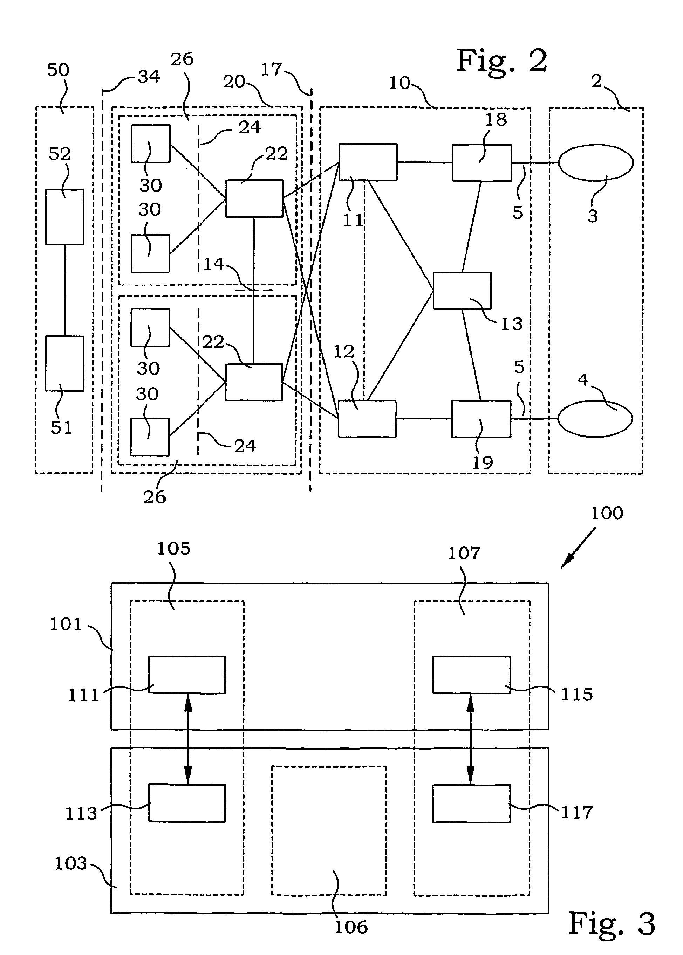

The internal communication of a mobile communication system 1 according to Fig. 1 is easier to overview if the system 1 is illustrated in an alternative manner, as in Fig. 2. Here the four fundamental subnetworks - the external networks 2, the core network 10, the UTRAN 20 and the UE 50. The external networks 2 may comprise more traditional telephony networks based on circuit switched technology 3, such as PLMN (Public Land Mobile Network), PSTN or ISDN. The external networks 2 may also comprise packet based communication networks 4, such as Internet.

The core network 10 comprises in this embodiment a GMSC (Gateway Mobile Switching Centre) 18, which is a switch at the point where all circuit switched connections to and from external networks pass. A MSC/VLR (Mobile Services Switching Centre/Visitor Location Register) 11, connected to the GMSC 18, is a switch and database that serves the UE for circuit switched services when the UE is within the range of a RNC 22 of the UTRAN 20 connected to the core network 10. The MSC function is used to switch the circuit switched calls. The VLR function holds track e.g. of the visiting user's service profile. The MSC/VLR 11 and the GMSC 18 are also connected to a HLR (Home Location Register) 13, which is a database located in the user's home system comprising a master copy of the user's service profile. The service profile comprises e.g. information about allowed services, supplementary service information and will in the case of MBMS also comprise information about such services. The HLR 13 stores the UE 50 location on the level of MSC/VLR and/or SGSN.

The core network 10 also comprises nodes connected to GPRS (General Packet Radio Service). A GGSN (Gateway GPRS Support Node) 19 is a switch at the point where all data packet traffic to and from external networks pass. The GGSN 19 is connected to a SGSN (Serving GPRS Support Node) 12. The functionality of the SGSN 12 is similar as for the MSC/VLR 11, but for packet switched services. The SGSN 12 and the GGSN 19 are also connected to the HLR 13. There might also be an optional interface between the MSC/VLR 11 and the SGSN 12.

The core network 10 communicates via the Iu interface 17 with the UTRAN 20. In this embodiment, the UTRAN 20 is illustrated to comprise two RNCs 22, interconnected by the Iur interface 14. Each RNC 22 has as in Fig. 1 control of Node Bs 30, which in turn communicates with the UE 50. A RNC 22 and associated Node Bs constitute together a Radio Network Subsystem (RNS) 26.

The RNC 22 is the network element responsible for the control of the radio resources of UTRAN 20. It interfaces the CN 10 and also terminates a Radio Resource Control (RRC) protocol that defines the messages and procedures between the mobile 50 and the UTRAN 20. Within the UTRAN 20, a RNC 22 can take up different roles, e.g. as a Serving RNC (SRNC), a Drift RNC (DRNC) or a Controlling RNC (CRNC).

A CRNC is always directly associated with one or more Node Bs 30. The CRNC is responsible for the load and congestion control of its own cells and executes the admission control and code allocation for new radio links to be established in those cells. The CRNC thus terminates the Iub interface 24 towards the Node B 30.

In the 3GPP standard, a UE can use resources for the UE-to-UTRAN connection from more than one RNS. The RNCs available in the UTRAN will then play different roles with respect of that particular UE. A SRNC for a particular mobile is a RNC that terminates both the Iu link for the transport of user data and the corresponding signaling to and from the core network related to radio access. The SRNC terminates further radio resource control signaling between the UE and the UTRAN. The SRNC may be a CRNC, but not necessarily. However, a specific UE has one and only one SRNC.

A DRNC is any other RNC that controls cells used by the UE. A DRNC of a UE is consequently always different from the SRNC of that specific UE. The DRNC routes data between the Iub and Iur interfaces. A certain UE may therefore have zero, one or more DRNCs.

One physical RNC normally contains all the CRNC, SRNC and DRNC functionalities. Furthermore, a SRNC associated with a certain UE may simultaneously be a DRNC for another UE.

A general protocol model for UTRAN terrestrial interfaces is illustrated in Fig. 3. The protocol structure 100 consists of two main layers, a radio network layer 101 and a transport network layer 103. All UTRAN-specific issues are visible only in the radio network layer. The protocol structure 100 is also divided into vertical planes, a control plane 105 and a user plane 107. The control plane 105 and the user plane 107 are therefore present in both layers 101, 103. Furthermore, a transport network control plane 106 is additionally available in the transport network layer 103.

The control plane 105 is used for all UMTS control signaling. It includes an application protocol 111 and a signaling bearer 113 for transporting application protocol messages. The application protocol 111 is typically used for setting up bearers to the UE, e.g. radio access bearer in the Iu interface and radio links in the Iur and Iub interfaces.

The user plane 107 is instead responsible for the transmission of all actual information to the user, e.g. in the form of coded voice or general data packets. The user plane 107 includes data streams 115 and data bearers 117 for the data streams 115. Each data stream 115 is characterized by at least one protocol specified for that particular interface.

The transport network control plane 106 is used for all control signaling within the transport layer and acts therefore between the control plane 105 and the user plane 107.

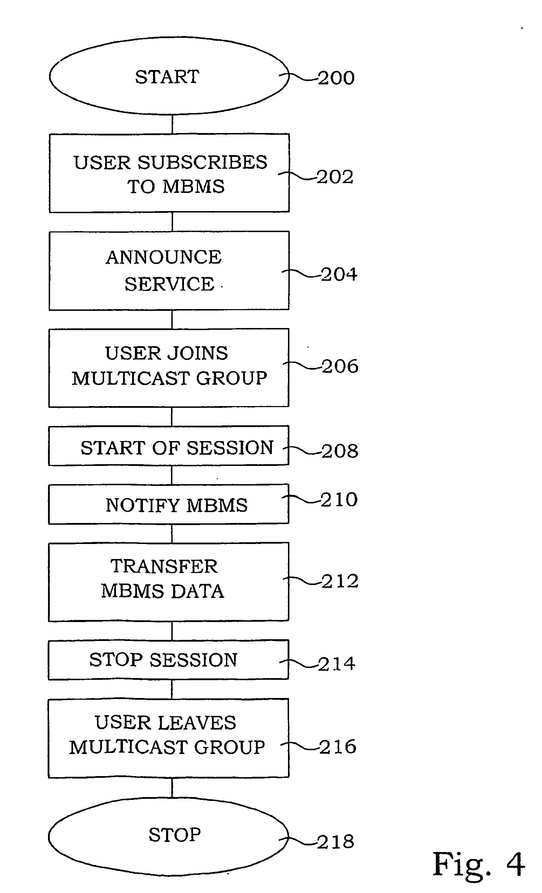

The MBMS is a service offered by a content provider to subscribers of such a service that comprises synchronized broadcasting and/or multicasting of multimedia information to a number of users. A typical embodiment of a procedure of a MBMS multicast service is illustrated in Fig. 4. The procedure starts in step 200. In step 202, a relationship between a service provider of MBMS and a user is established as a MBMS subscription associated to that particular user. The user becomes allowed to receive the related MBMS information. The service subscription is the agreement of a user to receive services offered by an operator, typically connected to certain subscription terms. The operator normally records user specific information in a database.

In step 204, a service announcement is performed. This mechanism provides the user with information about the service, parameters required for service activation and/or other parameters related to the service. The service start time is typically an important parameter. The way in which the announcement information is distributed may vary from system to system, from service operator to service operator and even from user to user within the same system. If a subscriber decides to activate the MBMS, the subscriber joins a multicast group, in step 206. This is an MBMS multicast activation by the user. The user indicates to the network that he is prepared to receive data of a specific MBMS.

Session start, step 208, is the step by which the broadcast-multicast service center starts to send data. The start occurs typically independently of activation of the service by the user. The session start may therefore occur after the joining step 206 as well as before the joining step 206, depending on the user actions. However, the session start is the trigger for network resources establishment for the MBMS data transfer. Step 210 is a MBMS notification, which informs the UEs about forthcoming and/or ongoing multicast data transfer. MBMS data is transferred to the UEs of a multicast group in step 212. The arrival of a first packet at the GGSN may coincide with the session start 208.

In step 214, the broadcast/multicast service center determines that there will be no more data to send for some period of time and stops the session. The period is long enough to justify a release of allocated network resources. In step 216, the user leaves the multicast group and is thereby no longer prepared to receive any MBMS data of that specific service. The procedure ends in step 218.

The steps of subscription 202, joining 206 and leaving 216 are performed individually per user. The other steps are performed on a service provider level, i.e. that all users involved are related to the steps. The steps may be repeated depending on the particular needs and requirements. Furthermore, the different steps may come in a different order or may be performed in parallel. Particular the steps of subscription 202, joining 206, leaving 216, service announcement 204 and MBMS notification 210 run typically in parallel with other steps.

The present invention does not relate to data transfer in the core network as such. Therefore the provision of the MBMS data from a content provider to a suitable SGSN is performed according to any suitable prior-art solutions and are not described more in detail. In the following description, it is therefore assumed that at least one SGSN has the requested MBMS data from the particular broadcast/ multicast service center available in one way or the other, e.g. via an GGSN as an entry point. The role of the SGSN is in this context to perform user individual network control functions and to provide MBMS transmissions to the radio access network.

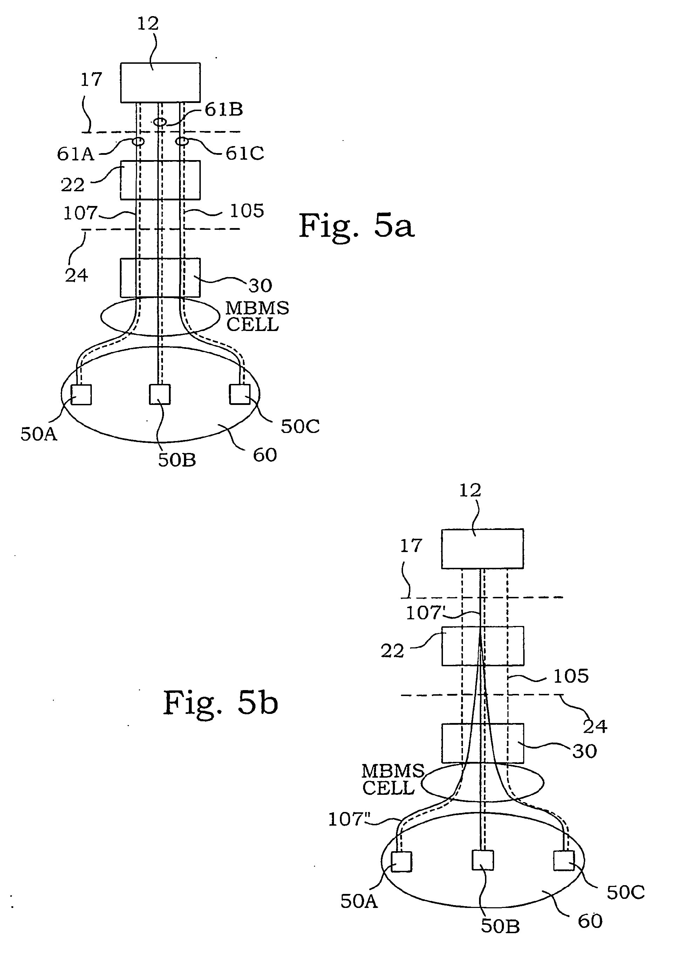

Consider a first MBMS scenario, illustrated in Fig. 5a. A SGSN 12 is connected to a RNC 22, which control a Node B 30. Three UEs 50A-C are subscribers of a particular MBMS, i.e. are members of a multicast group 60. Consequently, three connections 61A-C are established between the SGSN 12 and each of the UEs 50A-C. Each of these connections 61A-C comprises a user plane 107 and a signaling plane 105. Dedicated resources are thus used to provide the MBMS to the group members.

If the multicast group 60 has enough members, there will be a wish to use point-to-multipoint links for data distribution, in order to save resources. The UTRAN may, on a per cell basis, select whether to use a point-to-point or a point-to multipoint distribution of MBMS data. For, instance, if more than a predetermined number of users are members of the multicast group 60 and using point-to-point distribution, a switch to point-to-multipoint distribution can be selected. Similarly, if less than a predetermined number of users are member of a multicast group 60 using point-to-multipoint distribution, a switch to point-to-point distribution can be performed. The decision is preferably made by the CRNC of the cell in question.

In Fig. 5b, one has concluded that there are enough members in the multicast group 60 to make use of common resources. Each of the UEs 50 A-C still has its dedicated control plane and thereby its dedicated control signaling. This makes it possible to treat every member of the multicast group 60 individually with respect to signaling. However, the actual data stream to be sent to the different group members is identical, and individual resources are therefore not necessary. In order to save resources within the UTRAN, a single user plane 107' is used between the SGSN and the RNC as a common user plane for all members of the multicast group. Not until the RNC has to deliver the data stream, the user plane 107' is branched into dedicated user planes 107" for the different UEs 50A-C.

The RNC 22 in Fig. 5b has the entire control of this particular scenario. If any additional UE that is subscribing to the MBMS comes into the cell, the RNC is informed about these circumstances, as being the serving RNC of that UE. A suitable association between a dedicated control plane and a common user plane can be established. Similarly, if members of the multicast group disappears, e.g. are turned off or leaves the cell, the MBMS session can be altered accordingly. If too few UEs are present in the cell to motivate the use of common user plane resources, the RNC has all necessary information and may return to the traditional use of associated pairs of user planes and control planes.

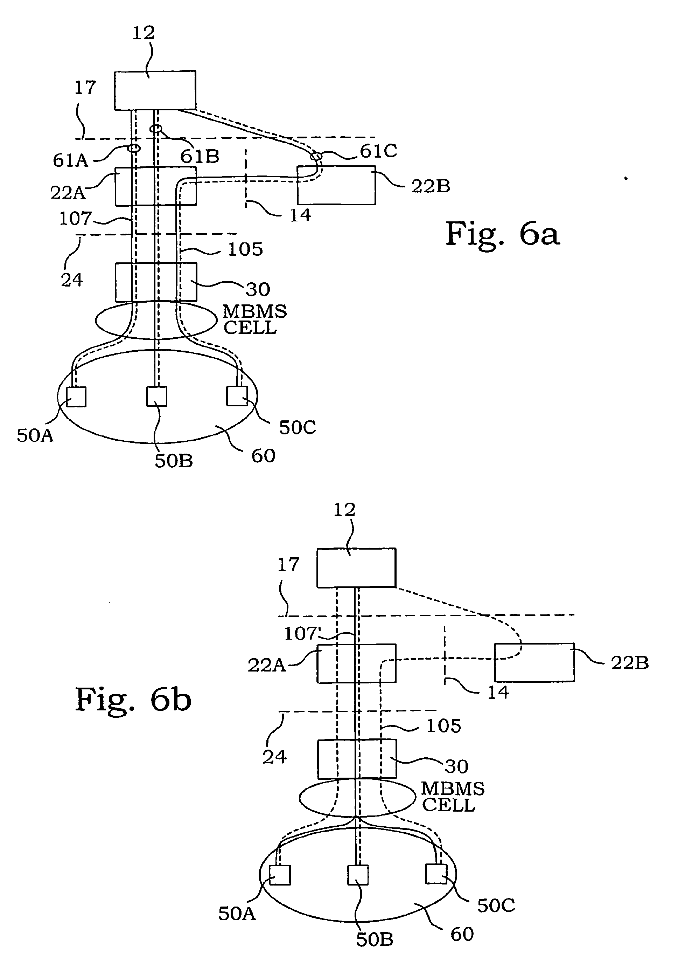

In the above case, where only one SGSN and one RNC are involved, the strategy may seem quite simple. However, in scenarios having the Iur interface the situation becomes more intricate. References are now made to Fig. 6a. In this scenario, two RNCs 22A, 22B are present. The RNC 22A is the CRNC for the cell in which the MBMS group 60 is present. A MBMS group 60 comprises three UEs 50A-C. The UEs 50A and 50B have the RNC 22A as a SRNC, while the UE 50C has the RNC 22B as its SRNC, and consequently, the RNC 22A is a DRNC for the UE 50C.

Three connections 61A-C are established between the SGSN 12 and each of the UEs 50A-C. The connections 61A and 61B goes directly from the SGSN 12 to the RNC 22A, while the connection 61C goes via the RNC 22B. Each of these connections 61A-C comprises a user plane 107 and a signaling plane 105. Dedicated resources are thus used to provide the MBMS to the group members.

In Fig. 6b, one has concluded that there are enough members in the multicast group 60 to benefit from using common resources. Each of the UEs 50A-C has in analogy with the previous example its dedicated control plane and thereby its dedicated control signaling. Also here, it is possible to treat every member of the multicast group 60 individually with respect to signaling. For example, each respective SRNC would still receive MBMS RAB assignments from the relevant CN node for the multicast group members it is in charge of via the ordinary Iu interface 17 as only the SRNC is fully aware of its own UEs.

The data stream to be sent to the different group members is identical, and individual resources are therefore not necessary. In order to save resources within the UTRAN, a single user plane 107' is also here used between the SGSN and the RNC 22A as a common user plane for all members of the multicast group. The MBMS RAB will thus possibly logically be associated with a user plane, which may be established towards another RNC. Here, a common resource for the data stream is used all the way to the different UEs 50A-C.

So far, the situation seems to be very similar to the one of Fig. 5b. However, to be able to control the use of a common user plane and to switch between dedicated and common resources, there has to be some knowledge about all UEs 50A-C participating in the multicast group 60 available for the same RNC. The RNC 22A in Fig. 5b has the control of two of the UEs 50A, 50B, since it has the role of the SRNC for these UEs. However, the UE 50C has the RNC 22B as SRNC and the RNC 22A has therefore no a priori knowledge about the status of UE 50C.

Therefore, according to a preferred embodiment of the present invention, the Iur interface 14 between the RNC 22A and the RNC 22B is arranged for supporting communication of MBMS information related to the UE 50C from the RNC 22B to the RNC 22A. The RNC 22A, which in this embodiment is the CRNC of the cell in which the multicast group is present, will initiate the establishment of the user plane carrying MBMS data over the Iu interface 17 when there are sufficient users for that MBMS multicast session in its cells. In other words, the RNC 22A comprises means, preferably as software routines, for achieving the use of a common user plane between the SGSN, e.g. a serving support node, and the RNC 22A for the requested multimedia broadcast/multicast data to the UEs. This functionality associates the control signaling arriving at the individual control planes to the RNC 22A with the data arriving at the common user plane.

With this embodiment of the invention, the CRNC will initiate the establishment of the Iu user plane carrying common MBMS data when there are sufficient users for that MBMS multicast session in cells under its control. Mechanisms over the Iur interface have to be provided in order to enable the UE 50C that is controlled by the RNC 22B to join a certain session. There is a need to transfer MBMS RAB (Radio Access Bearer) information coming from the core network to the DRNC 22A, so that the DRNC 22A can attach such an UE 50C to the MBMS session. The DRNC should preferably return to the SRNC the information on the actual resources allocated to the UE. This information may also be transferred at a later occasion. If these resources are common ones, the DRNC would already have or has to establish an Iu user plane for MBMS and there should be an indication that no MBMS content needs to be delivered to the SRNC.

If the necessary information is not provided over the Iur, it could be directly requested by the RNC from the CN via new Iu signaling.

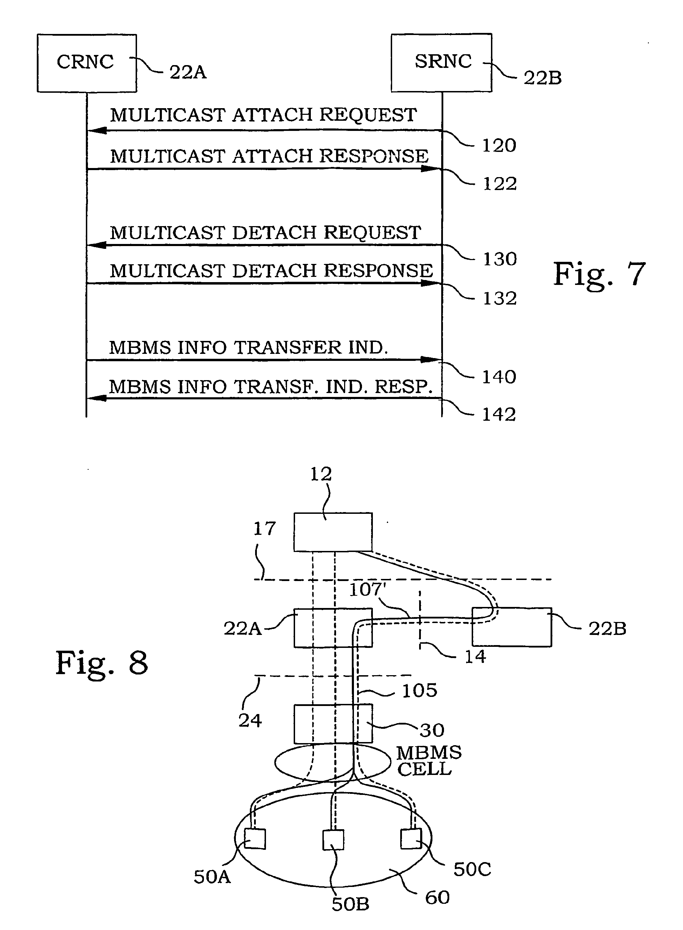

In Fig. 7, an embodiment of a new set of elementary procedures for the RNSAP protocol is presented, MULTICAST ATTACH, MULTICAST DETACH and MBMS INFORMATION TRANSFER INDICATION. When a UE, having the CRNC as a DRNC, wants to join a multicast group in the cell controlled by the CRNC, the CRNC has to be informed. This procedure is started from the SRNC (22B Fig. 6b) by issuing a MULTICAST ATTACH REQUEST message. By the request message the SRNC, which is aware of that the UE wants to join a certain MBMS session in a cell controlled by the DRNC, is requesting the DRNC to attach the user to that session. The DRNC may thereby add a new UE to the total number of UEs in its cell using the MBMS service. The MULTICAST ATTACH REQUEST message may preferably contain the cell ID of the new cell, the MBMS service ID and the U-RNTI (UTRAN Radio Network Temporary Identity) of the UE.

At this point, the decision of using dedicated or common resources is not necessarily made yet. In the MULTICAST ATTACH REQUEST 120 message, the SRNC will both relay information related to RAB establishment coming from the core network and information similar to what typically is included in a Radio Link Setup/Addition Request message in case dedicated resources are to be established for this UE. The SRNC is not yet aware if this is going to happen, since it is a DRNC decision. It could also be possible to include in this message a flag where the SRNC indicates its willingness to move the UE to common resources when the DRNC becomes aware that a common resource is more appropriate for this MBMS session.

Once the DRNC receives this information, it can decide what measures to take. A successful outcome message is then sent back from the DRNC (22A in Fig. 6b) by means of a MULTICAST ATTACH RESPONSE 122 message. When the DRNC becomes aware of how many users are bound for that MBMS session in that cell, it can reconsider whether the previous choice of transfer mode type still is the preferred one. In one embodiment of the RNSAP according to the present invention, such a decision will be made immediately upon the receipt of the attach request. If the MBMS session already uses a common resource, i.e. a common user plane, the addition of a new UE will probably not change the situation and the attach response message may then comprise information about the common resource and the Iu user plane to use. The SRNC is then informed that the MBMS data for this user is being delivered via the DRNC. If the MBMS session, previous to the attach request, instead uses dedicated resources, the addition of one more UE may change the situation. If it in such a situation is concluded that dedicated resources are still favorable, the DRNC will establish the relevant resources to use and the attach response message then comprises information about this dedicated resource. However, if the addition of a new UE changes the situation in such a way that a common resource would be favorable, the DRNC may initiate a change for the entire MBMS multicast group. The attach response message may then comprise information about the new common resource to use and the common Iu user plane.

In another embodiment of the RNSAP according to the present invention, the attach response message always comprises information reflecting the current resource situation, i.e. information about the common resource is included in the response message if a common resource is presently used, and information about a dedicated resource is included if dedicated resources are presently used. Any decision about whether the addition of the new UE will change the earlier communication preferences may then be taken afterwards and a change will then be initiated for all UEs participating in the multicast group, including the new UE.

If the procedure of adding the new UE to the MBMS session was not successful, the DRNC preferably creates a MULTICAST ATTACH FAILURE message and delivers it to the SRNC. Relevant information such as cause values etc. are then preferably included.

In order to enable the SRNC to remove the UE from the session, a corresponding multicast detach procedure can be used. A MULTICAST DETACH REQUEST message 130 is sent from the SRNC to the DRNC. This signaling is initiated when a user indicates that he wants to leave an ongoing MBMS session. The detach request preferably contains the cell ID of the used multicast cell, the MBMS service ID and the U-RNTI of the UE. The DRNC performs the necessary releases of resources and returns a MULTICAST DETACH RESPONSE message 132 confirming the end of the MBMS for that particular user.

A detach request from a UE may in analogy with the attach situation change the favorable resource utilization for the multicast group. If a common resource was used, the detach of a UE may make a transition into dedicated resources more favorable. There are preferably some RNSAP procedures provided, supporting a change forth and back between common resources and dedicated resources, i.e. channel switching procedures.

When channel switching from dedicated to common resources is to be performed, e.g. upon the entry of an additional UE, the CRNC for the cell in which the multicast group is present can initiate a change. The UEs to which the CRNC is a SRNC are easy to control since the CRNC has all information available. However, for UEs having the CRNC as a DRNC, RNSAP procedures are preferably utilized. The DRNC can then indicate, preferably knowing that the UE can be moved to common resources, the need for a switch. This is sent to the SRNC in an appropriate MBMS INFORMATION TRANSFER INDICATION message 140. Such a message 140 could also be used to relay other MBMS related control information needed at the SRNC. The message 140 comprises the information that a switch to point-to-multipoint transmission is performed, and necessary information about the common resource and the Iu user plane. When the SRNC receives such a message, it performs all changes necessary. For instance, it is preferred if the SRNC releases the Iu user plane corresponding to the dedicated resource previously used. Preferably, the SRNC also returns a response message 142 for confirming that the necessary changes has been performed.

If a MBMS multicast group uses a common resource and the number of members is reduced so that a use of dedicated resources would be favorable, a similar RNSAP signaling can be performed. A MBMS INFORMATION TRANSFER INDICATION message 140 is again transferred from the DRNC to the SRNC. Now the message contains information that a switch to point-to-point transmission is going to take place. Necessary information about dedicated resources to be used is enclosed. The SRNC performs actions necessary to enable such a MBMS session, e.g. allocates necessary Iu and Iur user planes. Preferably, the SRNC also returns a response message 142 for confirming that the necessary changes has been performed.

As anyone skilled in the art understands, the actual names of the messages are not essential for the invention. It is rather the function and content of messages that are important. Similarly, the messages can be configured in different ways. A MULTICAST ATTACH REQUEST can e.g. be divided into more than one actual message. A first message may e.g. contain the MBMS service ID and the actual request and a following message can comprise the remaining information necessary. The information content of such messages could even be transferred by means of extensions of already existing messages.

In a similar manner, more specified messages can be used instead of a general message comprising specifying data. For instance, the MBMS INFORMATION TRANSFER INDICATION message 140 could be exchanged for a MBMS p-t-m TRANSMISSION INITIATION message and a MBMS p-t-p TRANSMISSION INITIATION message, respectively, that are uniquely referring to one respective of the two possible transmission change directions. The response message 142 can in a similar manner be a MBMS p-t-m TRANSMISSION INITIATION RESPONSE message and a MBMS p-t-p TRANSMISSION INITIATION RESPONSE message, respectively.

If several UEs are controlled by a SRNC different from the CRNC of the multicast cell, MBMS information transfer indications have to be transferred regarding all UEs. The possibility of performing the multicast attach and MBMS information transfer per pools of UEs controlled by the same SRNC to reduce signaling over Iur is a possible and preferable option.

In the above embodiment of Fig. 6, the user plane in the common mode is selected along a path directly from the SGSN to the CRNC. This path is separated from the control plane path of the UE belonging to a SRNC different from the CRNC. However, in an alternative embodiment, illustrated in Fig. 8, the situation may be the opposite. In this embodiment, there is still only one user plane in the common resource mode, but this user plane goes through a path through a SRNC 22B different from the CRNC 22A. Here, the control planes to the UEs 50A and 50B are kept straight over the Iu interface between the SGSN 12 and the CRNC 22A, while the control plane of UE 50 C goes along a path parallel to the user plane.

When deciding to go to common resources, different schemes can be used. The most straightforward is to always let the user plane go directly on the Iu interface between the SGSN 12 and the CRNC 22A, which has been described above. However, if no UEs having the CRNC 22A as a SRNC participates in the multicasting group 60, all control planes will be separated from the user plane. It may then be interesting to set up the user plane over the Iur interface instead. When more UEs are joining, such a configuration may be kept even if the new UEs have the CRNC 22A as their SRNC, in order to reduce the signaling upon changing user plane.

Anyone skilled in the art realizes that there might be several different approaches in selecting the path of the user plane. The most probable is to always select the user plane over the direct Iu interface. One may, however, instead select the user plane according to the control plane of the first UE joining the multicast group 60. One may also determine to keep the user plane regardless of the mobility of the UEs, or one may intermittently update to the most favorable user plane path. All such variations are intended to be understood from the enclosed claims.

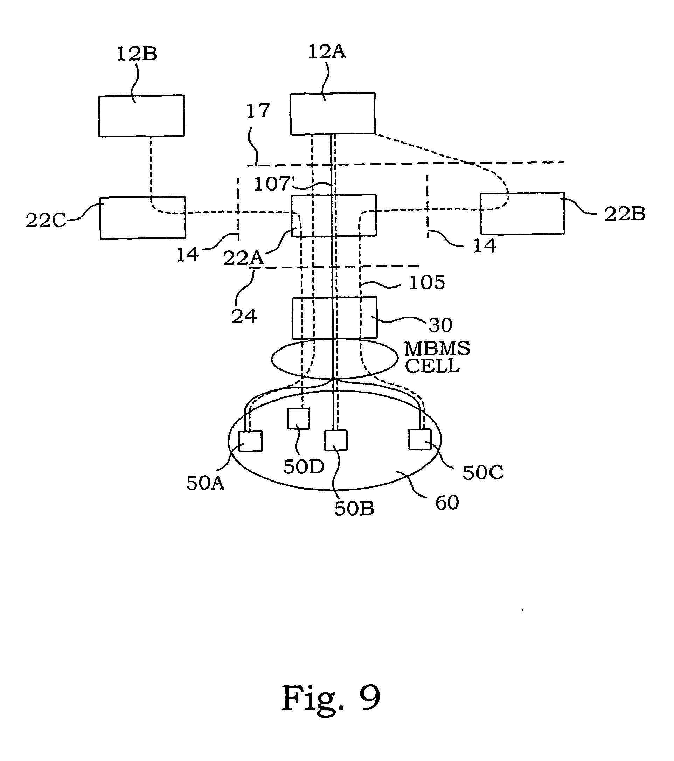

In Fig. 9, another embodiment of a system according to the present invention is illustrated. The scenario here includes a UE 50 D, being a member of the multicast group 60, but being served by a RNC 22C connected to an alternative SGSN 12B. The basic principles are valid also in such situations. The user plane can still go through a path between the "original" SGSN 12A and the CRNC 22A, while the control plane of UE 50D passes through the Iur interface 14 to the SRNC 22C and to the SGSN 12B. Anyone skilled in the art realizes that there are a huge number of different situations, which are applicable in an analogous manner.

In the above embodiments, the actual configuration of the radio air interface between the Node B and the UE has only been mentioned in general terms. Common or dedicated radio channels can be selected according to prior-art methods and devices, when appropriate. If the Iur interface is used for control channels, but not for the data, a common channel over the air interface has to be used. If a common data channel over Iu is used, either a common or dedicated data channels can be used over the air interface.

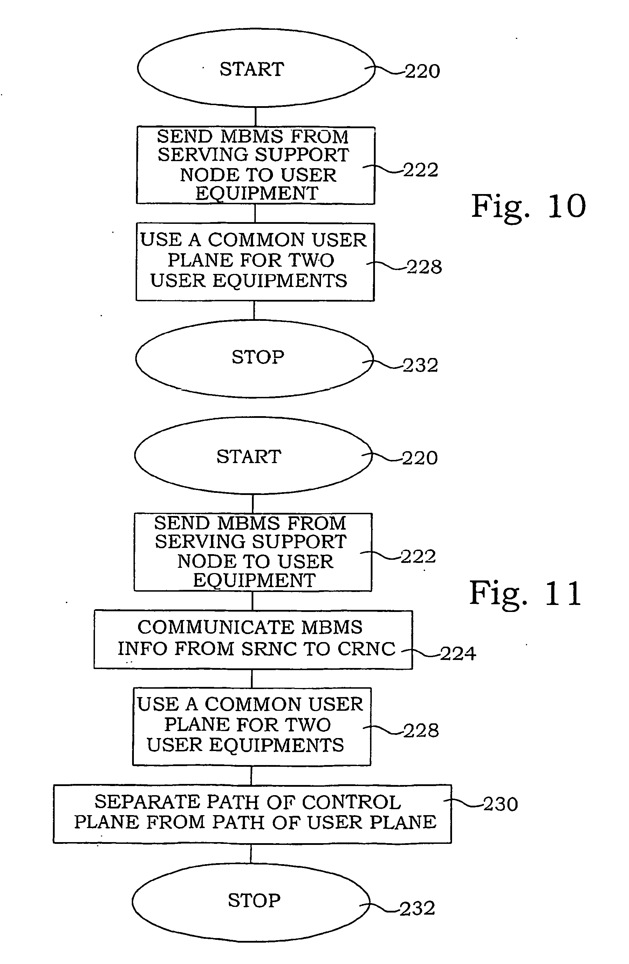

Fig. 10 illustrates the main steps in an embodiment of a method for providing multimedia broadcast/multicast service in a mobile telecommunication system according to the present invention. The procedure starts in step 220. In step 222, multimedia broadcast/multicast data is provided from a serving support node to at least two user equipments subscribing to the multimedia broadcast/multicast service. In step 228, a common user plane between the serving node and a radio network controller is used for transmission of the multimedia broadcast/multicast data to the two user equipments. The procedure ends in step 232.

Fig. 11 illustrates the main steps in another embodiment of a method for providing multimedia broadcast/multicast service according to the present invention. In this procedure, it is assumed that at least one user equipment subscribing to the multimedia broadcast/multicast service is served by a radio network controller (SRNC) different from the radio network controller (CRNC) in charge of the cell in which the user equipments of the multimedia broadcast/ multicast service are located. Similar steps as in Fig. 8 are denoted by the same reference number and are not discussed again. In step 224, information associated with MBMS is communicated from the SRNC to the CRNC. In step 230, a communication path of a control plane is separated from a communication path of the user plane for the user equipment served by the SRNC.

In the embodiments above, a multicasting service is assumed. However, broadcasting procedures of MBMS use similar principles and applicable parts of the invention can thus be used also for broadcasting services.

It will be understood by those skilled in the art that various modifications and changes may be made to the present invention without departure from the scope thereof, which is defined by the appended claims. In particular, different part embodiments of different embodiments shown above may freely be combined without falling outside the scope of the present invention.

## Claims

1. Method for providing multimedia broadcast/multicast service in a mobile telecommunication system (1) having at least one serving support node (12; 12A-B), at least two radio network controllers (22; 22A-C) and means for radio communication with at least two user equipments (50A-D) subscribing to said multimedia broadcast/multicast service, "MBMS" comprising the step of:
providing multimedia broadcast/multicast data from said at least one serving support node (12; 12A-B) to said at least two user equipments (50A-D),
**characterized by** the steps of:
using a common user plane (107') between a first serving support node (12; 12A) of said at least one serving support node (12; 12A-B) and a first radio network controller (22; 22A) of said at least two radio network controllers (22; 22A-C) for multimedia broadcast/ multicast data to at least a first user equipment and a second user equipment of said at least two user equipments (50A-D), wherein said first user equipment (50A-B) has said first radio network controller (22A) as serving radio network controller and said second user equipment (50C-D) has a second radio network controller (22B-C) as serving radio network controller, whereby a communication path of a control plane (105) of at least one of said first and second user equipment is separated from a communication path of said common user plane (107'), and
communicating MBMS information of said second user equipment (50C-D) from said second radio network controller (22B-C) to said first radio network controller (22A) over an interface (14) between the first radio network controller (22A) and the second radio network controller (22B).

2. Method according to claim 1, **characterized in that** all said at least two user equipments (50A-D) within a service area use said common user plane (107').

3. Method according to claim 1, **characterized in that** a communication path of said control plane (105) of said second user equipment (50C-D) is separated from said communication path of said common user plane (107').

4. Method according to claim 1, **characterized in that** said MBMS information of said second user equipment (50C-D) comprises an attach request.

5. Method according to claim 1 or 4, **characterized by** the further step of determining, in said first radio network controller (22A), whether use of common resources for MBMS data is favorable, based on said MBMS information communicated from said second radio network controller (22B-C).

6. Method according to claim 1, 4 or 5, **characterized by** the further step of communicating information associated with MBMS from said first radio network controller (22A) to said second radio network controller (22B-C).

7. Method according to claim 6, **characterized in that** said information associated with MBMS communicated from said first radio network controller (22A) to said second radio network controller (22B-C) comprises an attach response.

8. Method according to claim 6, **characterized in that** said information associated with MBMS communicated from said first radio network controller (22A) to said second radio network controller (22B-C) comprises an indication of transferring between a mode using said common user plane (107') and a mode using dedicated user planes (107).

9. Method according to claim 6, **characterized in that** said information associated with MBMS communicated from said first radio network controller (22A) to said second radio network controller (22B-C) comprises a request to remove any dedicated user planes to said second radio network controller (22B-C) for said second user equipment.

10. Controlling radio network controller (22; 22A-B) in a mobile telecommunication system (1) having at least one serving support node (12; 12A-B) and means for radio communication with at least two user equipments (50A-D) subscribing to a multimedia broadcast/multicast service "MBMS", comprising:
means for providing multimedia broadcast/multicast data from said at least one serving support node (12; 12A-B) to said at least two user equipments (50A-D),
**characterized by**:
means for using a common user plane (107') between a first serving support node (12; 12A) of said at least one serving support node (12; 12A-B) and said controlling radio network controller (22; 22A) for multimedia broadcast/multicast data to at least a first user equipment and a second user equipment of said at least two user equipments (50A-D), and
an interface to a second radio network controller (22B-C) serving as serving radio network controller of said second user equipment (50C-D), and means for separating a communication path of a control plane (105) of at least one of said first and second user equipment (50A-D) from a communication path of said common user plane (107'), wherein said interface is arranged to communicate MBMS information of said second user equipment (50C-D) from said second radio network controller (22B-C) to said controlling radio network controller (22A).

11. Controlling radio network controller according to claim 10, **characterized in that** said means for using a common user plane (107') is arranged to handle communication to all said at least two user equipments (50A-D) within a service area.

12. Controlling radio network controller according to claim 10, **characterized in that** said means for separating is arranged to separate said communication path of said control plane (105) of said second user equipment (50C-D) from said communication path of said common user plane (107').

13. Controlling radio network controller according to claim 10, **characterized by** further comprising means for determining whether use of common resources for MBMS data is favorable, based on said MBMS information communicated from said second radio network controller (22B-C).

14. Controlling radio network controller according to claim 10 or 13, **characterized in that** said interface is further arranged to communicate information associated with MBMS from said controlling radio network controller (22A) to said second radio network controller (22B-C).

15. Serving radio network controller (22; 22A-C) in a mobile telecommunication system (1) having at least one serving support node (12; 12A-B), at least one further radio network controller (22; 22A-C) and means for radio communication with at least two user equipments (50A-D) subscribing to a multimedia broadcast/multicast service, "MBMS", said serving radio network controller comprising:
means for providing multimedia broadcast/ multicast service control signaling over a control plane (105) to a first of said at least two user equipments (50A-D),
interface to a first (22A) of said at least one further radio network controller (22; 22A-C) serving as controlling radio network controller of said at least two user equipments (50A-D),
**characterized in that**
said interface is arranged to communicate MBMS information of said first of said at least two user equipments (50A-D) from said serving radio network controller (22; 22A-C) to said first (22A) of said at least one further radio network controller (22; 22A-C) so that the first radio network controller (22A) is enabled to establish a common user plane (107') between the serving support node (12; 12A) and the first radio network controller (22; 22A) for multimedia broadcast/multicast data to at least the first user equipment and the second user equipment, wherein the communication path of the common user plane (107') is separated from the communication path of the control plane (105).

16. Serving radio network controller according to claim 15, **characterized in that** said interface is further arranged to communicate information associated with MBMS from said first (22A) of said at least one further radio network controller (22; 22A-C) to said serving radio network controller (22; 22A-C).

17. Serving radio network controller according to claim 16, **characterized by** further comprising means for removing a user plane for multimedia broadcast/multicast data to said first of said at least two user equipments (50A-D) in response to said information associated with MBMS requesting such removing.

## Patentansprüche

1. Verfahren zum Bereitstellen von Multimedia-Broadcast-/-Multicastdienst in einem Mobiltelekommunikationssystem (1) mit mindestens einem Serving-GSN (Serving Support Node) (12; 12A-B), mindestens zwei RNCs (Funknetzsteuerungen) (22; 22A-C) und einem Mittel für Funkkommunikation mit mindestens zwei Benutzergeräten (50A-D), die Subskribenten des Multimedia-Broadcast-/-Multicastdienstes, "MBMS", sind, folgende Schritte umfassend:
Bereitstellen von Multimedia-Broadcast-/-Multicastdaten vom mindestens einen Serving-GSN (12; 12A-B) an die mindestens zwei Benutzergeräte (50A-D),
**gekennzeichnet durch** folgende Schritte:
Verwenden einer gemeinsamen Benutzerebene (107') zwischen einem ersten Serving-GSN (12; 12A) des mindestens einen Serving-GSN (12; 12A-B) und einer ersten RNC (22; 22A) der mindestens zwei RNCs (22; 22A-C) für Multimedia-Broadcast-/- Multicastdaten zu mindestens einem ersten Benutzergerät und einem zweiten Benutzergerät der mindestens zwei Benutzergeräte (50A-D), worin das erste Benutzergerät (50A-B) die erste RNC (22A) als Serving-RNC hat und das zweite Benutzergerät (50C-D) eine zweite RNC (22B-C) als Serving-RNC hat, wodurch ein Kommunikationsweg einer Steuerebene (105) von mindestens einem der ersten und zweiten Benutzergeräte von einem Kommunikationsweg der gemeinsamen Benutzerebene (107') getrennt ist, und
Kommunizieren von MBMS-Information des zweiten Benutzergeräts (50C-D) von der zweiten RNC (22B-C) an die erste RNC (22A) über eine Schnittstelle (14) zwischen der ersten RNC (22A) und der zweiten RNC (22B).

2. Verfahren nach Anspruch 1, **dadurch gekennzeichnet, dass** alle mindestens zwei Benutzergeräte (50A-D) innerhalb eines Dienstgebiets die gemeinsame Benutzerebene (107') verwenden.

3. Verfahren nach Anspruch 1, **dadurch gekennzeichnet, dass** ein Kommunikationsweg der Steuerebene (105) des zweiten Benutzergeräts (50C-D) vom Kommunikationsweg der gemeinsamen Benutzerebene (107') getrennt ist.

4. Verfahren nach Anspruch 1, **dadurch gekennzeichnet, dass** die MBMS-Information des zweiten Benutzergeräts (50C-D) eine Anmeldungsanforderung umfasst.

5. Verfahren nach Anspruch 1 oder 4, **gekennzeichnet durch** den weiteren Schritt, in der ersten RNC (22A) zu bestimmen, ob das Verwenden von gemeinsamen Ressourcen für MBMS-Daten auf der Basis der von der zweiten RNC (22B-C) kommunizierten MBMS-Information vorteilhaft ist.

6. Verfahren nach Anspruch 1, 4 oder 5, **gekennzeichnet durch** den weiteren Schritt, mit MBMS assoziierte Information von der ersten RNC (22A) an die zweite RNC (22B-C) zu kommunizieren.

7. Verfahren nach Anspruch 6, **dadurch gekennzeichnet, dass** die mit MBMS assoziierte, von der ersten RNC (22A) an die zweite RNC (22B-C) kommunizierte Information eine Anmeldungsantwort umfasst.

8. Verfahren nach Anspruch 6, **dadurch gekennzeichnet, dass** die mit MBMS assoziierte, von der ersten RNC (22A) an die zweite RNC (22B-C) kommunizierte Information eine Anzeige umfasst, zwischen einem die gemeinsame Benutzereben (107') verwendenden Modus und einem dedizierte Benutzerebenen (107) verwendenden Modus zu transferieren.

9. Verfahren nach Anspruch 6, **dadurch gekennzeichnet, dass** die mit MBMS assoziierte, von der ersten RNC (22A) an die zweite RNC (22B-C) kommunizierte Information eine Anforderung enthält, dedizierte Benutzerebenen zur zweiten RNC (22B-C) für das zweite Benutzergerät zu entfernen.

10. Controlling-RNC (22; 22A-B) in einem Mobiltelekommunikationssystem (1) mit mindestens einem Serving-GSN (12; 12A-B) und einem Mittel zur Funkkommunikation mit mindestens zwei Benutzergeräten (50A-D), die Subskribenten eines Multimedia-Broadcast-/-Multicastdienstes, "MBMS", sind, Folgendes umfassend:
ein Mittel zum Bereitstellen von Multimedia-Broadcast-/-Multicastdaten vom mindestens einen Serving-GSN (12; 12A-B) an die mindestens zwei Benutzergeräte (50A-D),
**gekennzeichnet durch**:
ein Mittel zum Verwenden einer gemeinsamen Benutzerebene (107') zwischen einem ersten Serving-GSN (12; 12A) des mindestens einen Serving-GSN (12; 12A-B) und der Controlling-RNC (22; 22A) für Multimedia-Broadcast-/-Multicastdaten zu mindestens einem ersten Benutzergerät und einem zweiten Benutzergerät der mindestens zwei Benutzergeräte (50A-D), und
eine Schnittstelle zu einer zweiten RNC (22B-C), die als Serving-RNC des zweiten Benutzergeräts (50C-D) dient, und ein Mittel zum Trennen eines Kommunikationswegs einer Steuerebene (105) von mindestens einem der ersten und zweiten Benutzergeräte (50A-D) von einem Kommunikationsweg der gemeinsamen Benutzerebene (107'), worin die Schnittstelle dazu angeordnet ist, MBMS-Information des zweiten Benutzergeräts (50C-D) von der zweiten RNC (22B-C) an die Controlling-RNC (22A) zu kommunizieren.

11. Controlling-RNC nach Anspruch 10, **dadurch gekennzeichnet, dass** das Mittel zum Verwenden einer gemeinsamen Benutzerebene (107') dazu angeordnet ist, Kommunikationen an alle mindestens zwei Benutzergeräte (50A-D) innerhalb eines Dienstgebiets abzuwickeln.

12. Controlling-RNC nach Anspruch 10, **dadurch gekennzeichnet, dass** das Mittel zum Trennen dazu angeordnet ist, den Kommunikationsweg der Steuerebene (105) des zweiten Benutzergeräts (50C-D) vom Kommunikationsweg der gemeinsamen Benutzerebene (107') zu trennen.

13. Controlling-RNC nach Anspruch 10, **dadurch gekennzeichnet, dass** sie außerdem ein Mittel umfasst, um zu bestimmen, ob das Verwenden von gemeinsamen Ressourcen für MBMS-Daten auf der Basis der von der zweiten RNC (22B-C) kommunizierten MBMS-Information vorteilhaft ist.

14. Controlling-RNC nach Anspruch 10 oder 13, **dadurch gekennzeichnet, dass** die Schnittstelle außerdem dazu angeordnet ist, mit MBMS assoziierte Information von der RNC (22A) an die zweite RNC (22B-C) zu kommunizieren.

15. Serving-RNC (22; 22A-C) in einem Mobiltelekommunikationssystem (1) mit mindestens einem Serving-GSN (12; 12A-B), mindestens einer weiteren RNC (22; 22A-C) und einem Mittel zur Funkkommunikation mit mindestens zwei Benutzergeräten (50A-D), die Subskribenten eines Multimedia-Broadcast-/-Multicastdienstes, "MBMS", sind, wobei die Serving-RNC umfasst:
ein Mittel zum Bereitstellen von Multimedia-Broadcast-/-Multicastdienst-Steuersignalisierung über eine Steuerebene (105) an ein erstes der mindestens zwei Benutzergeräte (50A-D),
eine Schnittstelle zu einer ersten (22A) der mindestens einen RNC (22; 22A-C), die als Controlling-RNC der mindestens zwei Benutzergeräte (50A-D) dient,
**dadurch gekennzeichnet, dass**:
die Schnittstelle dazu angeordnet ist, MBMS-Information des ersten der mindestens zwei Benutzergeräte (50A-D) von der Serving-RNC (22; 22A-C) an die erste (22A) der mindestens einen weiteren RNC (22; 22A-C) zu kommunizieren, sodass die erste RNC (22A) dazu befähigt ist, eine gemeinsame Benutzerebene (107') zwischen dem Serving-GSN (12; 12A) und der ersten RNC (22; 22A) für Multimedia-Broadcast-/- Multicastdaten an mindestens das erste Benutzergerät und das zweite Benutzergerät aufzubauen, worin der Kommunikationsweg der gemeinsamen Benutzerebene (107') vom Kommunikationsweg der Steuerebene (105) getrennt ist.

16. Serving-RNC nach Anspruch 15, **dadurch gekennzeichnet, dass** die Schnittstelle außerdem dazu angeordnet ist, mit MBMS assoziierte Information von der ersten (22A) der mindestens einen RNC (22; 22A-C) an die Serving-RNC (22; 22A-C) zu kommunizieren.

17. Serving-RNC nach Anspruch 16, **dadurch gekennzeichnet, dass** sie außerdem ein Mittel umfasst, um eine Benutzerebene für Multimedia-Broadcast-/-Multicastdaten zu dem ersten der mindestens zwei Benutzergeräte (50A-D) als Antwort auf die mit MBMS assoziierte Information zu entfernen, die ein solches Entfernen anfordert.

## Revendications

1. Procédé destiné à fournir un service de multidiffusion / diffusion multimédia dans un système de télécommunication mobile (1) présentant au moins un noeud de support de service (12 ; 12A - B), au moins deux contrôleurs de réseau radio (22 ; 22A - C) et un moyen de radiocommunication avec au moins deux équipements utilisateur (50A - D) s'abonnant audit service de multidiffusion / diffusion multimédia, « MBMS », le procédé comportant les étapes ci-dessous consistant à :
fournir des données de multidiffusion / diffusion multimédia dudit au moins un noeud de support de service (12 ; 12A - B) auxdits au moins deux équipements utilisateur (50A - D),
**caractérisé par** les étapes ci-dessous consistant à :
utiliser un plan utilisateur commun (107') entre un premier noeud de support de service (12, 12A) dudit au moins un noeud de support de service (12 ; 12A - B) et un premier contrôleur de réseau radio (22 ; 22A) desdits au moins deux contrôleurs de réseau radio (22 ; 22A - C ) pour multidiffuser / diffuser en multimédia des données à au moins un premier équipement utilisateur et un second équipement utilisateur parmi lesdits au moins deux équipements utilisateur (50A - D), dans lequel ledit premier équipement utilisateur (50A - B) présente ledit premier contrôleur de réseau radio (22A) en tant que contrôleur de réseau radio de desserte et ledit second équipement utilisateur (50C - D) présente un second contrôleur de réseau radio (22B - C) en tant que contrôleur de réseau radio de desserte, moyennant quoi un chemin de communication d'un plan de commande (105) d'au moins l'un desdits premier et second équipements utilisateur est séparé d'un chemin de communication dudit plan utilisateur commun (107') ; et
communiquer des informations de service MBMS concernant ledit second équipement utilisateur (50C - D) dudit second contrôleur de réseau radio (22B - C) audit premier contrôleur de réseau radio (22A) sur une interface (14) entre le premier contrôleur de réseau radio (22A) et le second contrôleur de réseau radio (22B).

2. Procédé selon la revendication 1, **caractérisé en ce que** l'ensemble desdits au moins deux équipements utilisateur (50A - D), au sein d'une zone de service, utilise ledit plan utilisateur commun (107').

3. Procédé selon la revendication 1, **caractérisé en ce qu'**un chemin de communication dudit plan de commande (105) dudit second équipement utilisateur (50C - D) est séparé dudit chemin de communication dudit plan utilisateur commun (107').

4. Procédé selon la revendication 1, **caractérisé en ce que** lesdites informations de service MBMS dudit second équipement utilisateur (50C - D) comportent une demande de rattachement.

5. Procédé selon la revendication 1 ou 4, **caractérisé en outre par** l'étape consistant à déterminer, dans ledit premier contrôleur de réseau radio (22A), si l'utilisation de ressources communes pour des données de service MBMS est favorable, sur la base desdites informations de service MBMS communiquées à partir dudit second contrôleur de réseau radio (22B - C).

6. Procédé selon la revendication 1, 4 ou 5, **caractérisé en outre par** l'étape consistant à communiquer des informations associées au service MBMS dudit premier contrôleur de réseau radio (22A) audit second contrôleur de réseau radio (22B - C).

7. Procédé selon la revendication 6, **caractérisé en ce que** lesdites informations associées au service MBMS communiquées dudit premier contrôleur de réseau radio (22A) audit second contrôleur de réseau radio (22B - C) comportent une réponse de rattachement.

8. Procédé selon la revendication 6, **caractérisé en ce que** lesdites informations associées au service MBMS communiquées dudit premier contrôleur de réseau radio (22A) audit second contrôleur de réseau radio (22B - C) comportent une indication de transfert entre un mode utilisant ledit plan utilisateur commun (107') et un mode utilisant des plans utilisateur dédiés (107).

9. Procédé selon la revendication 6, **caractérisé en ce que** lesdites informations associées au service MBMS communiquées dudit premier contrôleur de réseau radio (22A) audit second contrôleur de réseau radio (22B - C) comportent une demande visant à supprimer tous les plans utilisateur dédiés au niveau dudit second contrôleur de réseau radio (22B - C) pour ledit second équipement utilisateur.

10. Contrôleur de réseau radio de commande (22 ; 22A - B) dans un système de télécommunication mobile (1) présentant au moins un noeud de support de service (12 ; 12A - B) et un moyen de radiocommunication avec au moins deux équipements utilisateur (50A - D) s'abonnant à un service de multidiffusion / diffusion multimédia « MBMS », comprenant :
un moyen pour fournir des données de multidiffusion / diffusion multimédia dudit au moins un noeud de support de service (12 ; 12A - B) auxdits au moins deux équipements utilisateur (50A - D),
**caractérisé par** :
un moyen pour utiliser un plan utilisateur commun (107') entre un premier noeud de support de service (12, 12A) dudit au moins un noeud de support de service (12 ; 12A - B) et ledit contrôleur de réseau radio de commande (22 ; 22A) en vue de multidiffuser / diffuser en multimédia des données à au moins un premier équipement utilisateur et un second équipement utilisateur parmi lesdits au moins deux équipements utilisateur (50A - D) ; et
une interface au niveau d'un second contrôleur de réseau radio (22B - C), faisant office de contrôleur de réseau radio de desserte dudit second équipement utilisateur (50C - D), et un moyen pour séparer un chemin de communication d'un plan de commande (105) d'au moins un desdits premier et second équipements utilisateur (50A - D) d'un chemin de communication dudit plan utilisateur commun (107'), dans lequel ladite interface est agencée de manière à communiquer des informations de service MBMS connexes audit second équipement utilisateur (50C - D), dudit second contrôleur de réseau radio (22B - C) audit contrôleur de réseau radio de commande (22A).

11. Contrôleur de réseau radio de commande selon la revendication 10, **caractérisé en ce que** ledit moyen pour utiliser un plan utilisateur commun (107') est agencé de manière à gérer les communications vers l'ensemble desdits au moins deux équipements utilisateur (50A - D) au sein d'une zone de service.

12. Contrôleur de réseau radio de commande selon la revendication 10, **caractérisé en ce que** ledit moyen de séparation est agencé de manière à séparer ledit chemin de communication dudit plan de commande (105) dudit second équipement utilisateur (50C - D) dudit chemin de communication dudit plan utilisateur commun (107').

13. Contrôleur de réseau radio de commande selon la revendication 10, **caractérisé en ce qu'**il comporte en outre un moyen permettant de déterminer si l'utilisation de ressources communes pour les données de service MBMS est favorable, sur la base desdites informations de service MBMS communiquées à partir dudit second contrôleur de réseau radio (22B - C).

14. Contrôleur de réseau radio de commande selon la revendication 10 ou 13, **caractérisé en ce que** ladite interface est en outre agencée de manière à communiquer les informations associées au service MBMS dudit contrôleur de réseau radio de commande (22A) audit second contrôleur de réseau radio (22B - C).

15. Contrôleur de réseau radio de desserte (22 ; 22A - C) dans un système de télécommunication mobile (1) présentant au moins un noeud de support de service (12 ; 12A - B), au moins un contrôleur de réseau radio (22 ; 22A - C) supplémentaire et un moyen de radiocommunication avec au moins deux équipements utilisateur (50A - D) s'abonnant à un service de multidiffusion / diffusion multimédia « MBMS », ledit contrôleur de réseau radio de desserte comprenant :
un moyen pour fournir une signalisation de commande de service de multidiffusion / diffusion multimédia sur un plan de commande (105) à un premier desdits au moins deux équipements utilisateur (50A - D),
une interface à un premier (22A) desdits au moins un contrôleur de réseau radio (22 ; 22A - C) faisant office de contrôleur de réseau radio de commande desdits au moins deux équipements utilisateur (50A - D),
**caractérisé en ce que**
ladite interface est agencée pour communiquer des informations de service MBMS dudit premier desdits au moins deux équipements utilisateur (50A - D) dudit contrôleur de réseau radio de desserte (22 ; 22A - C) audit premier (22A) dudit au moins un contrôleur de réseau radio supplémentaire (22 ; 22A - C), de sorte que le premier contrôleur de réseau radio (22A) est en mesure d'établir un plan utilisateur commun (107') entre le noeud de support de service (12 ; 12A) et le premier contrôleur de réseau radio (22 ; 22A) pour multidiffuser / diffuser en multimédia des données au moins audit premier équipement utilisateur et audit second équipement utilisateur, dans lequel le chemin de communication du plan utilisateur commun (107') est séparée du chemin de communication du plan de commande (105).

16. Contrôleur de réseau radio de desserte selon la revendication 15, **caractérisé en ce que** ladite interface est en outre agencée de manière à communiquer des informations associées au service MBMS dudit premier (22A) dudit au moins un contrôleur de réseau radio supplémentaire (22 ; 22A - C) audit contrôleur de réseau radio de desserte (22 ; 22A - C).

17. Contrôleur de réseau radio de desserte selon la revendication 16, **caractérisé en ce qu'**il comporte en outre un moyen pour supprimer un plan utilisateur en vue de multidiffuser / diffuser en multimédia des données audit premier desdits au moins deux équipements utilisateur (50A - D) en réponse au fait que les informations associées au service MBMS demandent une telle suppression.
